(19) Europäisches Patentamt
European Patent Office
Office européen des brevets

(11) Publication number: 0 185 242
A2

# (12) EUROPEAN PATENT APPLICATION

(21) Application number: 85115288.4

(22) Date of filing: 02.12.85

(51) Int. Cl.[4]: C 08 F 214/24
//(C08F214/24, 210:02, 214:18)

(30) Priority: 20.12.84 US 684420

(43) Date of publication of application:
25.06.86 Bulletin 86/26

(84) Designated Contracting States:
DE FR GB IT

(71) Applicant: ALLIED CORPORATION
Columbia Road and Park Avenue P.O. Box 2245R (Law Dept.)
Morristown New Jersey 07960(US)

(72) Inventor: Reimschuessel, Herbert Kurt
c/o Allied Corporation P.O. Box 2245R
Morristown New Jersey 07960(US)

(72) Inventor: Rahl, Forrest John
c/o Allied Corporation P.O. Box 2245R
Morristown New Jersey 07960(US)

(72) Inventor: Ulmer, Harry Edwards
c/o Allied Corporation P.O. Box 2245R
Morristown New Jersey 07960(US)

(72) Inventor: Chandrasekaran, Swayambu
c/o Allied Corporation P.O. Box 2245R
Morristown New Jersey 07960(US)

(74) Representative: Brullé, Jean et al,
Service Brevets Bendix 44, rue François 1er
F-75008 Paris(FR)

## (54) Copolymers of chlorotrifluoroethylene, ethylene and perfluoroalkylethylenes.

(57) This invention relates to copolymers of chlorotrifluoroethylene, ethylene and perfluoroalkylethylenes which have improved resistance to thermal stress cracking and improved high temperature properties.

EP 0 185 242 A2

Croydon Printing Company Ltd.

## DESCRIPTION

## COPOLYMERS OF CHLOROTRIFLUOROETHYLENE, ETHYLENE AND PERFLUOROALKYLETHYLENES

## BACKGROUND OF THE INVENTION

(1) Field of the Invention

This invention relates to copolymers of chlorotrifluoroethylene, ethylene and perfluoroalkylethylenes. More particularly, this invention relates to such copolymers having improved high temperature properties, in particular, improved resistance to thermal stress cracking.

(2) Prior Art

U.S.P. No. 3,738,923 describes copolymers of 40 to 60 mole percent of ethylene and from 40 to 60 mole percent of chlorotrifluoroethylene or tetrafluoroethylene. Copolymers of 40 to 60 mole percent of ethylene and 40 to 60 mole percent of tetrafluoroethylene or chlorotrifluoroethylene have high melting points, generally in the order of above 200°C. However, their use at temperatures above about 150°C has been severely restricted due to their tendency to stress-crack at such temperatures under tensile stresses appreciably below the limits of their short-term strength.

U.S.P 3,847,881 discloses that the thermal stress-cracking characteristics of copolymers of about 40 to 60 mole percent of ethylene and about 40 to 60 mole percent of halogenated comonomers selected from the group consisting of tetrafluoroethylene, chlorotrifluoroethylene and mixtures thereof are improved by incorporating therein from 0.1 to 10 mole percent, based on the moles of halogenated comonomer, of 3,3,3-trifluoro-2-trifluoromethylpropene.

U.S.P. 3,706,723 discloses that thermoplastic 3,3,3-trifluoro-2-trifluoromethylpropene/1,1-difluoroethylene copolymers are prepared by copolymerizing the monomers in liquid media in the presence of a free radical generating initiator. The copolymer products are

melt-processable, retain their mechanical strength at high temperatures, and resist attack by corrosive agents and solvents.

U.S.P. 3,893,987 discloses that copolymers may be formed by copolymerization of from about 0.1 to 30 mole percent of perhalogenated monomer selected from the group consisting of tetrafluoroethylene, chlorotrifluoroethylene and mixtures thereof, and 3,3,3-trifluoro-2-trifluoromethyl propene/1,1-difluoroethylene copolymer. These materials have improved melt processing characteristics, without seriously deteriorating their good mechanical properties and chemical resistance. However, U.S.P. 3,893,987 further discloses that attempts to introduce ethylene as a third monomer into the copolymer failed to produce a copolymer at low ethylene feed levels. A copolymer of 3,3,3-trifluoro-2-trifluoromethyl propane and ethylene was produced at high ethylene feed levels, and a copolymer that decomposed before melting was produced at intermediate ethylene feed levels.

U.S.P. 4,123,602 discloses a copolymer consisting of from 40 to 60 mole % of tetrafluoroethylene, 40 to 60 mole % of ethylene and 0.1 to 10 mole % of perfluoroalkyl vinyl component having the formula:

$$CH_2=CH-C_nF_{2n+1}$$

wherein n is an integer of 2 to 10. The patent discloses that the copolymer is formed only if, throughout the course of the copolymerization, the molar ratio of $C_2F_4$ to $C_2H_2$ in the reactor is maintained essentially higher than 40 to 60 while keeping the mole percent of the perfluoroalkyl vinyl monomer essentially in the range of from 0.1 to 10, based on the total monomer's content.

U.K. Patent Application 2,084,593A discloses copolymers consisting of 93-99 mole % tetrafluoroethylene units and 7-1 mole % fluorinated ($C_2$-$C_{10}$) alkylethylene comonomer units and being characterized by having the units of the copolymer substantially

uniformly positioned throughout the copolymer chain. The copolymers of the UK Patent Application are produced by copolymerization process wherein the fluorinated alkyl ethylene is uniformly added to the reaction vessel throughout the polymerization so as to maintain its concentration below 2.5 mole % relative to the tetrafluoroethylene.

U.S.P. No. 3,624,250 discloses that the high temperature tensile properties of a copolymer consisting essentially of chlorotrifluoroethylene or tetrafluoroethylene and ethylene are improved by incorporating therein a small amount of a vinyl monomer having the formulae:

$$R\text{-}CF_2{=}\ CF_2 \text{ or } ROCF{=}\ CF_2 \text{ or } R_1CH_2C(X){=}\ CH_2 \text{ or } R_2OCH_2C(X){=}CH_2$$

wherein X is H or $CH_3$. While use of vinyl monomers such as $R_1CH_2C(X)=CH_2$, wherein $R_1$ is $CF_3$ or $CF_3CF_2$, and X=H, and perfluoroalkyl ethers ($R_2OCH_2C(X)=CH_2$), wherein $R_2$ is perfluoroisopropyl and X = H is disclosed, working examples are only provided for perfluoroalkene-1 of the general structure $R_1CF=CF_2$ and perfluorooxyl vinyl ethers ($ROCF-CF_2$).

There is always a need for other comonomers which, when incorporated into copolymers of 40 to 60 mole percent of ethylene and 40 to 60 mole percent of chlorotrifluoroethylene, produce new copolymers of improved resistance to thermal stress-cracking, water vapor permeability, and attack by common organic solvents, inorganic acids and bases at elevated temperature, without having significant adverse effects on thermal stability.

## SUMMARY OF THE PRESENT INVENTION

In accordance with the present invention, it has surprisingly been discovered that the thermal stress-cracking characteristics of copolymers of ethylene and chlorotrifluoroethylene are improved by incorporating within the copolymer "an effective amount" of one or

more perfluoroalkyl substituted ethylene monomers of the formula:

$$R_1\ CH{=}CH_2$$

wherein $R_1$ is linear or branched chain perfluoroalkyl. As used herein "an effective amount" of said perfluoroalkyl substituted ethylene monomer is an amount sufficient to improve the thermal stress-cracking characteristics of copolymers of ethylene and chlorotrifluoroethylene to any extent.

The novel copolymers of this invention and their unique characteristics are surprising in view of the prior art. For example UK Patent No. 2,084,593A suggests that mixture of chlorotrifluoroethylene, ethylene and perfluoroalkyl substituted ethylene monomer should not polymerize to form the terpolymer. Although UK Patent 2,084,593A discloses that tetrafluoroethylene is capable of forming copolymers with fluorinated alkylethylenes such as perfluorobutylethylene, perfluoropropylethylene, and 3,3,4,4-tetrafluorobutene-1, it was found that analogous copolymers could not be obtained from mixtures consisting of chlorotrifluoroethylene and perfluoroalkylethylenes such as perfluorobutylethylene, perfluorohexylethylene, and perfluorooctylethylene, or their mixtures when subjected to conditions at which copolymers are formed from chlorotrifluoroethylene and ethylene. This patent also discloses that under the same conditions, mixtures of any of said perfluoroalkyl-substituted ethylenes with ethylene also failed to polymerize to yield copolymers. In view of the disclosures of this patent, it was quite surprising that a mixture of the three different monomers namely, chlorotrifluoroethylene, ethylene and any of the above-described perfluoroalkyl substituted ethylenes, readily polymerized yielding high molecular weight copolymers. Polymerization occurred also quite readily when a specific perfluoroalkyl substituted ethylene was substituted by a mixture of

different perfluoroalkyl substituted ethylenes.

The thermal stress-cracking characteristics of the copolymer of this invention are also surprisingly superior to those exhibited by prior art polymers. For example, the copolymer compositions obtained according to this invention are characterized by improved resistance to thermal stress cracking when compared to either ethylene-chlorotrifluoroethylene copolymers or copolymers containing segments of 3,3,3-trifluoro-2-trifluoromethyl propane according to U.S. Patent 3,847,881.

The considerable improvement in the resistance to stress cracking with respect to the copolymers according to U.S. Patent 3,847,881 is particularly surprising. Though equal molar concentrations of perfluoroalkylethylenes and hexafluoroisobutylene cause about the same melting point depression -- indicating the same extent of reduction in polymer crystallinity -- the thermal stress cracking performances of the two systems are quite different.

It is believed that the superior performance of the copolymers of the present invention is a consequence of their particular chemical structure and composition, and can therefore not be expected *per se* from any copolymers obtained by copolymerization of perhalogenated ethylenes, ethylene, and a vinyl monomer. The perfluorinated side chain containing copolymers of this invention are therefore also quite different -- particularly with respect to their superior thermal stability, melt process ability, and resistance to solvents -- from corresponding copolymers described in U.S. Patents 3,445,434 and 3,624,250.

## DESCRIPTION OF THE PREFERRED EMBODIMENTS

The copolymer of the invention comprises chlorotrifluoroethylene, ethylene, and an effective amount of one or more perfluoroalkyl substituted ethylene moieties of the formula:

$$R_1CH=CH_2$$

wherein $R_1$ is as described above. The relative proportions of the various monomeric units can vary widely. In the preferred embodiments of the invention, the copolymer will contain:

(a) from about 40 to about 60 mole percent chlorotrifluoroethylene;

(b) from about 40 to about 60 mole percent of ethylene; and

(c) from about 0.1 to about 10 mole percent of the perfluoroalkyl substituted ethylene monomer.

In these preferred embodiments of the invention, the copolymer is characterized by having chlorotrifluoroethylene-ethylene-perfluoroalkyl ethylene-segments randomly distributed throughout alternating chlorotrifluoroethylene-ethylene segments.

In the particularly preferred embodiments of this invention, the mole percent of ethylene is from abut 45 to about 55, the mole percent of chlorotrifluoroethylene is from about 45 to about 55 and the mole percent of said perfluoroalkyl substituted ethylene moeity is from about 0.1 to about 5.0. Among these particularly preferred embodiments, most preferred are those embodiments in which the mole percent of ethylene is from about 47.5 to about 52.5, the mole percent of chlorotrifluoroethylene is from about 47.5 to 52.5, and the mole percent of said one or more perfluoroalkyl substituted ethylene moieties is from about 0.1 to about 1.5.

Useful perfluoroalkyl substituted ethylene monomers can vary widely provided that they fall within the scope of the above-referenced structural formula. A single type of perfluoroalkyl substituted ethylene monomer can be used, or mixtures of such monomeers can be employed. Illustrative of useful perfluoroalkyl substituted ethylene monomers are those of the above formula in which $R_1$ is perfluorooctyl, perfluorohexyl, perfluoroisobutyl, perfluoroneopentyl, perfluoroisodecyl, perfluoroisopropyl, perfluoroundecyl, perfluorononyl, perfluoroisopentyl, perfluoroeicosyl,

perfluoropentyl, perfluorohexadecyl, perfluoroisohexyl, perfluorooctadecyl, perfluoroisoctadecyl and the like. In the preferred embodiments of the invention, useful perfluorosubstituted ethylene monomers are those in which $R_1$ is a branched chain or linear perfluoroalkyl group having up to about 25 carbons, and in the particularly preferred embodiments, useful perfluorosubsituted ethylene are those containing up to about 14 carbon atoms and are of the formula:

$$CF_3\underset{\underset{R_2}{|}}{C}F(CF_2\underset{\underset{R_3}{|}}{C}F)_nCH=CH_2$$

wherein :

n is from 0 to about 5; and

$R_2$ and $R_3$ are the same or different and are fluorine or perfluoroalkyl having from 1 to about 4 carbons. Amongst these particularly preferred embodiments most preferred are those embodiments in which:

n is from 0 to about 3; and

$R_2$ and $R_3$ are the same or different and are trifluoromethyl or fluorine.

Especially effacious results have been obtained where the copolymers contain from about 0.1 to about 10 mole percent, preferably from about 0.1 to about 5 mole percent of a mixture of perfluoroalkylethylenes selected from the group consisting of perfluorobutylethylene, perfluorohexylethylene and perfluorooctylethylene. These embodiments of the invention exhibit superior resistance to thermal stress-cracking at temperatures of about 200°C, low water permeability, resistance to common organic solvents as well as common inorganic alkalis and acids, and significantly increased elongation at high temperatures.

The copolymers of this invention can be conveniently prepared using conventional polymerization techniques, such as bulk polymerization, emulsion polymerization, solution polymerization or suspension polymerization, which techniques are well known in the

art. In such copolymerization procedures, the polymerization is effected by contacting the desired composition of monomers in a suitable liquid polymerization medium with a free radical generating polymerization initiator. Suitable liquid polymerization media include aqueous media as well as non-aqueous media. Illustrative of suitable non-aqueous media are excesses of one or more of the liquid monomers, or non-polymerizable organic solvents, such as perfluorinated and perchlorofluorinated hydrocarbons containing up to about 10 carbon atoms which are liquid at the chosen polymerization temperature, and especially perfluorinated and perchlorofluorinated alkanes of up to about 6 carbon atoms having melting points below about 80°C, and saturated perfluorocyclic ethers. A partial listing of organic solvents suitable for use as liquid polymerization media includes perfluorocyclobutane, pentachlorofluoroethane, trichlorotrifluoroethane, 1,1,2,2,-tetrachloro-1,2-difluoroethane, perfluoro-n-butane, perfluoro-n-pentane, trichlorofluoromethane, dichlorofluoromethane, dichlorodifluoromethane, 1,2-dichloro-1,1,2,2-tetrafluoroethane, and the like. The 3,3,3-trifluoro-2-trifluoromethyl propene monomer and octafluorocyclobutane are most preferred reaction solvents.

Suitable free radical generating polymerization initiators include organic peroxy compounds such as the well known aliphatic and aromatic peroxy compounds, including the fluorine and chlorine substituted organic peroxides, as for example, 2,4-dichlorobenzoyl peroxide, t-butylperoxypivalate, pelargonyl peroxide, decanoyl peroxide, bis-trichloroacetyl peroxide, lauroyl peroxide, propionyl peroxide, acetyl peroxide, trifluoroacetyl peroxide, trichloroacetyl peroxide, perfluoropropionyl peroxide, succinic acid peroxide, t-butyl peroxyisobutyrate, t-butyl-peroxy maleic acid, 1-hydroxy-1'-hydroperoxy dicyclohexyl peroxide, bis(1-hydroxycyclohexyl) peroxide, 2,5-dimethyl-hexane-2,5-diperbenzoate, t-butyl diperphthalate, t-butyl perbenzoate, n-butyl-4,4-bis(t-butylperoxy)valerate, ketone peroxide, 2,5-dimethyl-2,5-bis(t-butyl peroxy)hexane, di-t-butyl peroxide, 2,5-dimethyl-2,5-bis(t-butyl peroxy)hexyne-3; organic azonitrile compounds such as azo-bis-isobutyronitrile, 2,2'-azo-bis-2,4-dimethylvaleronitrile, and 2,2'-azo-bis-2,3,3-trimethylbutyronitrile; peroxidic esters such as di-iso-propyl peroxydicarbonate, and others. Although the above-described free radical initiating polymerization initiators are especially suitable for making the copolymers of the present invention by copolymerizing the monomers using as liquid reaction medium one or more of the monomer <u>per se</u>, or using organic solvents as above described, they may also be used for carrying out the copolymerization in aqueous media in the presence or absence of emulsifying and/or suspending agents.

When the copolymerization is to be carried out in the presence of an aqueous medium, and, especially, in aqueous emulsion, there may additionally be used as free radical generating polymerization initiators water-soluble peroxides such as hydrogen peroxide, barium peroxide and sodium peroxide; persulfate, perphosphate and perborate salts of, e.g., sodium, potassium, calcium, barium and ammonium and organic hydroperoxides such as cumene hydroperoxide or t-butyl hydroperoxide. These water-soluble free radical generating polymerization initiators may be use in conjunction with suitable reducing agents which act as catalyst activators, such as alkali metal bisulfites, alkali metal formaldehyde sulfoxylates, or sulfur dioxide. If desired, the above-described types of water-soluble free radical generating polymerization initiators may be used in conjunction with known accelerators therefor, such as silver salts, for example, silver nitrate or silver nitrite, ferrous sulfate, ferrous nitrate, and others.

Generally, the initiator will be employed in amounts of about 0.003 to about 3 percent, usually about 0.02 to about 1 percent by weight, based on the monomer

charge. The initiator may be added initially, or, in order to maintain desired polymerization rates, intermittently or continuously throughout the polymerization.

Copolymerization may also be initiated or catalyzed by active radiation, as may, for example, be provided by ultraviolet light γ-rays and the like. The copolymerization reaction process is preferably carried out in an aqueous suspension employing suitable emulsifying and/or suspension agents using a suitable azo or peroxide catalyst dissolved in an non-telogenic solvent, as for example the halocarbon described above. In this particularly preferred embodiment, bis-trichloroacetyl peroxide is the initiator of choice and 1,1,2-trichloro-1,2,2-trifluoroethane is the solvent of choice.

Emulsification and/or suspension agents suitable for use in carrying out the copolymerization in aqueous emulsions or suspension include the emulsifying agents customarily employed in emulsion polymerization of polymerizable ethylenically unsaturated organic compounds, such as alkali metal soaps of higher fatty acids, as for example potassium, ammonium or sodium myristate, laurate, palmitate, oleate or stearate; the alkali metal or ammonium alkyl or alkylene sulfates or sulfonates, such as, e.g., sodium and/or potassium lauryl or decyl sulfate, cetyl and stearyl sulfonate; but especially the well-known polyfluorinated carboxylic acid emulsifying agents, such as perfluorooctanoic acid, and their alkali metal and ammonium salts. The suspending and emulsifying agents may be employed within wide ranges of concentration known to those of skill in the art, but are ordinarily employed in amounts ranging from about 0.05 to about 5, preferably in amounts ranging from about 0.1 to about 2 percent by weight, based on the weight of the aqueous medium.

Polymerization temperatures and pressure are not critical and can be varied widely. The copolymerization may be carried out at temperatures within the range of from about -80° to about 300°C, is preferably carried

out at temperatures in the range of -20° to about 100°C, and more preferably, at temperatures within the range of from about -15° to about 80°C. When the copolymerization is to be conducted in an aqueous medium, then the polymerization temperature is usually not lower than about 0°C. In any event, copolymerization in accordance with the present invention is carried out at temperatures above those at which the liquid polymerization medium employed will solidify, and the choice of copolymerization temperature will largely be governed by the desired decomposition rate at a given temperature of the particular initiator or initiator system employed. The copolymerization may be carried out at any desired pressure. Pressures from about sub-atmospheric to super-atmospheric can be used, but it is suitably conducted at pressures ranging from about atmospheric to about 500 psig for reasons of economy in equipment design and copolymerization conditions. The copolymerization may also be conducted under superimposed pressures, as obtained by charging the polymerization zone with a gas, such as nitrogen.

If desired, the molecular weight of the copolymer product may be varied or controlled by inclusion in the polymerization recipe of one or more of the well-known chain transfer agents or chain transfer solvents. A preferred agent is chloroform. Recovery of the copolymer product from the polymerization medium follows conventional procedure. When the reaction is carried out in one of the organic solvents as hereinabove defined, or in aqueous suspension, then the copolymer product is generally obtained as a white granular powder which can be readily separated from the reaction medium by conventional methods, such as gassing off the excess monomers and low boiling solvents. When the copolymerization is carried out in aqueous emulsion, the copolymer product is generally obtained as latex. The product may be recovered in conventional manner by first coagulating the latex, and then separating the

coagulated product by filtration. Coagulation of the latex may be effected by methods well known to those skilled in the art, for example, by addition of electrolytes, by agitation, sonic vibration, and the like. In any event, the copolymer product after separation from the reaction medium is ordinarily washed with suitable solvents, e.g. methanol, to remove catalyst residues.

The chlorotrifluoroethylene and ethylene monomer used in the preparation of the copolymers of this invention are known compounds which can be obtained by known commercial processes. Useful perfluoroalkylethylene monomer can be obtained from commercial sources or prepared in accordance with known techniques. For example, these monomers can be conveniently prepared by the addition of ethylene to the products of iodine induced telomerization of tetrafluoroethylene, followed by dehydroiodation of the resulting iodides. This procedure is illustrated in the following reaction scheme:

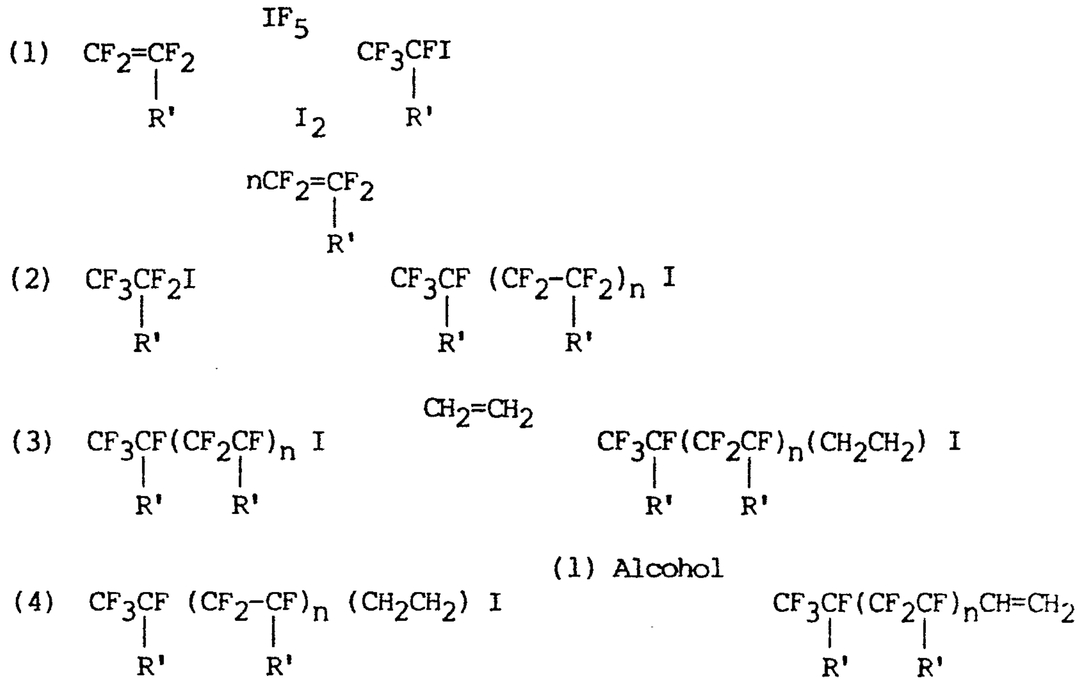


In the above reaction scheme, n is as defined herein below, and R is the same or different at each occurrence as is $R_1$ or $R_2$ as defined herein below. This procedure is described in more detail in R.N. Haszeldine, J.Chem.Soc., 4219 (1955), and U.S.P. 3,132,185 (1964) which are incorporated herein by reference.

Perfluoroalkylethylenes for use in the practice of this invention can also be conveniently prepared by reaction of an appropriate perfluoroalkyl halide with malonic acid, reduction of the resulting acid to the corresponding alcohol and dehydration of the alcohol to provide the desired perfluoroalkylethylene.

Various other optional ingredients, which are normally included in polymer compositions, may be added to the copolymers of this invention at an appropriate time. Such optional components include fillers, plasticizers, impact modifiers, colorants, mold release agents, antioxidants, ultraviolet light stabilizers, lubricants, antistatic agents, fire retardants, and the like. These optional components are well known to those of skill in the art, and accordingly will not be described herein in detail.

Copolymers of this invention are characterized by improved thermal properties and a resistance to thermal stress cracking as compared to either ethylene-chlorotrifluoroethylene copolymers or polymers according to U.S.P. 3,847,881. They are extremely useful in high temperature applications such as insulation coatings for wire exposed to temperatures in the range of up to about 180°C.

The following specific examples are presented to illustrate the invention in detail and should not be construed as a limitation thereon.

## EXAMPLES 1 TO 17

Procedure:

A 1-l Parr Bomb reactor fitted with a 6.35 cm dia. impeller, a spiral cooling coil, a 0-3.55 x $10^3$ KPa pressure gauge, thermocouple well, feed and discharge ports was used as polymerization reactor. Feed and discharge ports were fitted with needle and check valves. Feed vessels for ethylene gas, liquified CTFE gas, methanol/chloroform/perfluoroalkylethylene monomer mixtures, and bis-trichloroacetyl peroxide (TCAP) catalyst in 1,1,2-trifluoro-1,2,2-trichloroethane solvent were fitted with high pressure tubing, gauges, and valves. A 3.785 L vessel was used to collect the unreacted fluoromonomers when the polymerization was terminated. A large metal dewar was used for chilling the above vessel to -78°C (dry ice/acetone). The reactor, its auxiliary equipments, and all feed vessels were constructed of #316 stainless steel. The reaction was stirred at 1000 rpm by an impeller driven by a "V" belt between pulleys on the shaft of an explosion proof motor and the reactor shaft. A cooling unit was connected in series with the internal spiral cooling coil of the reactor to control the reaction temperature. The reactor base was placed in a cooling bath whose temperature was maintained with another cooling unit.

The 1 liter reactor was charged with 300 mL of

distilled water, cooled to +10°C, then pressurized with nitrogen to ~$2.0 \times 10^3$ kpa. When sealed against leaks, the nitrogen was vented and the reactor pressure reduced with a vacuum pump to $6.9 \times 10^2$Pa. A mixture of 84 mL of methanol, 1.1 mL of chloroform, and 6.75 g of perfluorohexylethylene (F6E) was put into a previously evacuated 150 mL feed vessel and pressurized to 0.21 KPa with nitrogen. The feed vessel was connected to the reactor. All feed lines were flushed with nitrogen and the pressurized contents of the feed vessel allowed to enter the reactor. An evacuated, weight, 250 mL feed vessel was chilled to -40°C and charged with 150 g of chlorotrifluoroethylene (CTFE) gas. The feed vessel was connected to the reactor and all lines were purged with nitrogen. The feed vessel was warmed to 50°C and the CTFE fed into the reactor which was kept under reduced pressure. The reactor was then pressurized with ethylene gas to $2.0 \times 10^3$ kPa through a controlling in-line gas regulator. Stirring was initiated. The reactor and its contents were maintained at +10°C. 0.3g of bis-trichloroacetyl peroxide (TCAP) catalyst were added to 20 mL of G-113 previously chilled to -25°C. This diluted catalyst mixture was put into a previously evacuated 40 mL feed vessel chilled to -25°C. It was then pressurized to $3.9 \times 10^3$ kPa with nitrogen and connected to the reactor. All feed lines were flushed with nitrogen and the diluted catalyst solution was permitted to enter the reactor. Ethylene gas was always available upon demand. As the polymerization progressed and ethylene gas was consumed, more gas entered the reactor through the in-line regulator. The polymerization was terminated after less than 8% monomer conversion in order that an essentially constant monomer feed ratio was maintained. The reaction was terminated by addition of 0.04 g of hydroquinone in 75 mL of methanol via a pressurized feed vessel. The ethylene feed was stopped. The reaction pressure was quickly reduced by passing the reactor gases first through a molecular

sieve to trap entrained water and then into a large CTFE trap chilled in a dry ice/acetone dewar. The CTFE and F6E condensed and the ethylene gas was permitted to escape into the atmosphere. The reactor was swept free of CTFE and F6E with nitrogen prior to opening the reactor. The polymer was washed in a Waring Blender with methanol, filtered, and then dried in a vacuum oven at 80°C for 24 hours.

The melting point of the copolymer was determined by differential scanning colorimeter. The reaction parameters and reaction products are set forth in the following Table I. The abbreviations used in Table I have the following meanings:

1. "CTFE" is chlorotrifluoroethylene
2. "F6E" is perfluorohexylethylene
3. "F4E" is perfluorobutylethylene
4. "F8E" is perfluorooctylethylene
5. "M-1" is a mixture of 20 mole percent perfluorobutylethylene, 52.1 mole percent perfluorohexylethylene and 39.11 mole percent perfluorooctylethylene
6. "M-2" is a mixture of 20 mole percent perfluorobutylethylene, 60 mole percent perfluorohexylethylene and 20 mole percent perfluorooctylethylene
7. "M-3" is a mxture of 35.2 mole percent perfluorobutylethylene, 30.0 mole percent perfluorohexylethylene and 34.8 mole percent perfluorooctylethylene
8. "M-4" is a mixture of 40 mole percent perfluorobutylethylene, 20 mole percent perfluorohexylethylene and 40 mole percent of perfluorooctylethylene.

TABLE I

| Example. No. | Polymer Composition CTFE Mole % | Ethylene Mole % | 3rd Monomer Mole % | 3rd Monomer Type | Polymer m.p. °C (DSC) |
|---|---|---|---|---|---|
| I | 48.43 | 50.38 | 1.19 | F6E | 229 |
| II | 48.40 | 50.07 | 1.53 | F6E | 227 |
| III | 48.58 | 49.56 | 1.86 | F6E | 222 |
| IV | 48.54 | 49.31 | 2.15 | F6E | 215 |
| V | 48.95 | 48.49 | 2.56 | F6E | 214 |
| VI | 47.68 | 50.32 | 2.00 | F4E | 227 |
| VII | 47.68 | 51.25 | 1.07 | F8E | 227 |
| VIII | 47.79 | 51.06 | 1.15 | M-1 | 227 |
| IX | 49.29 | 51.47 | 1.30 | M-2 | 227 |
| X | 48.15 | 50.75 | 1.10 | M-3 | 226 |
| XI | 48.60 | 50.35 | 1.10 | M-4 | 227 |
| XII | 48.40 | 50.96 | 0.64 | F6E | 234 |
| XIII | 49.02 | 50.23 | 0.75 | F6E | 233 |
| XIV | 49.02 | 50.18 | 0.80 | F6E | 233 |
| XV | 47.47 | 51.68 | 0.84 | F6E | 231 |
| XVI | 48.93 | 50.51 | 0.50 | F6E | 234 |

COMPARATIVE EXAMPLE 1

An experiment was carried out to show that perfluorohexylethylene and chlorofluoroethylene do not polymerize in the absence of ethylene, and thus demonstrates the criticality of the three monomer mixture. In this experiment, a 1 liter stainless steel autoclave was charged with 292 mL of deaerated deionized water. The autoclave was flushed with nitrogen, then evacuated. A blend of 0.95 mL of chloroform, 84 mL of anhydrous methanol and 65 g of perfluorohexylethylene was introduced followed by 22 g of chlorotrifluoroethylene. Nitrogen gas was charged to the reactor at 185 psig at 8°C followed by 0.124 g of trichloroacetyl peroxide dissolved in 20 mL of 1,1,2-trifluoro-1,2,2-trichloroethane solvent. The reaction was stirred vigorously at 1000 rpm for 2 hours. At the end of this time the reaction was flushed free of chlorotrifluoroethylene monomer with nitrogen. The reaction mixture

evidenced two layers. The bottom layer was the clear dense liquid monomer perfluorohexylethylene; the upper layer had an oily hazy appearance, attributed to finely displaced perfluorohexylethylene, catalyst fragments or 1,1,2-trifluoro-1,2,2-trichloroethane solvent.

No polymer was evident.

COMPARATIVE EXAMPLE 2

An experiment was carried out to show that ethylene and perfluorohexylethylene do not polymerize in the absence of chlorotrifluoroethylene, and thus demonstrates the criticality of the three monomer mixture. The procedure of Examples I to XVI was employed except that the monomers employed were perfluorohexylethylene and ethylene gas at 270 psig. At the end of 2 hours and 20 minutes the reactor was again found to contain two layers. The bottom layer was the clear liquid monomer perfluorohexylethylene and the upper layer was a hazy oily liquid which cleared upon standing. The oily hazy appearance is attributed to finely displaced monomer catalyst fragments, or 1,1,2-trifluoro-1,2,2-trichloro ethane solvent.

No polymer was evident.

COMPARATIVE EXAMPLE 3

A series of experiments were conducted to demonstrate the criticality of the specific combination of monomers used in the preparation of the copolymer of this invention to the superior thermal properties of the copolymer as compared to known copolymers. The principal test was the Bent-Strip Test which was performed on film strips 0.38mm (0.015 in.) thick, 6.35mm (0.25 in.) wide, and 76.2mm (3 in.) long. The strips were cut from sheets obtained by compression molding a weighed amount of polymer granules between silicon coated aluminum plates within an aluminum spacer frame at temperatures of about 15°C above the polymer melting point. The molding process entailed applying first pressure between 500kg to 2000kg for one minute and then 2000kg for two minutes in a preheated press, followed by

cooling in a cool press at 7000kg pressure. Each film strip was bent over a stainless steel rod of 7.94mm (5/16 in.) diameter. The ends were aligned and secured together at a constant length in the platens of a clamp with parallel jaws applying a torque of about 4.5kg.

After attaching an additional load to the clamping device such that the total weight amounted to 200g, each clamped specimen was placed on a 6.35mm (0.25 in.) diameter stainless steel rod mounted in an oven in which a temperature of 180 ± 2°C was maintained.

Although any known control device may be used to indicate sample failure, a simple signalling device for recording each sample facture and the time of its occurrence was constructed using an Iron-Constantane thermocouple wire. A normal thermocouple junction was formed by welding the junction of the iron and constantane wires. To form a switch, one wire was cut which opens the circuit. A clip was fastened to each end of the cut wire. One clip was attached to the oven floor and the other clip to the sample clamp. The thermocouple was attached to one of the 12 positions of a temperature recorder. Since the sample is non-conducting, no signal flows while the sample is intact and the sample clamp is without contact with the oven floor. Therefore, the recorder registers off scale for that particular thermocouple position. When the sample fails, the clamp touches the oven floor and thereby completes the circuit, the thermocouple now measures the oven temperature and the recorder registers both the thermocouple number and the temperature. The time of failure is determined from the position of the marks on the chart and the chart speed.

Conventional copolymers employed in the tests are as follows:

(1) "H-2" is a conventional copolymer of 2.22 mole percent hexafluoroisobutylene, 49.49 mole percent ethylene and 50.52 mole percent of chlorotrifluoroethylene having a melting point of 220°C.

(2) "H-1" is a conventional copolymer of 50.52 mole percent of chlorotrifluoroethylene and 49.48 mole percent of ethylene having a melting point of 238°C.

(3) The test results are expressed as "TFR", which is the ratio of the time to failure of the copolymer of this invention to the time to failure of the conventional polymer to which it is being compared.

The results of this test are set forth in the following Table II.

TABLE II

Bent Strip Test Results

| Exp. No. | Polymer Composition by Example No. | TFR Values H-1 | TFR Values H-2 |
|---|---|---|---|
| 1 | I | 300 | 20 |
| 2 | II | >170 | >13 |
| 3 | III | 310 | 20 |
| 4 | IV | >320 | >20 |
| 5 | V | >100 | >10 |
| 6 | VI | >480 | >54 |
| 7 | VII | 240 | 24 |
| 8 | VIII | 285 | 19 |
| 9 | IX | 240 | 25 |
| 10 | X | >400 | >50 |
| 11 | XI | >300 | >20 |
| 12 | XII | 300 | 23 |
| 13 | XIII | 340 | 31 |
| 14 | XIV | 230 | 18 |
| 15 | XV | 225 | 19 |
| 16 | XVI | 170 | 14 |

An additional test, the Mandrel Wrap Test, was performed according to ASTMD-2951-70 at 150°C using as control samples both a conventional ethylene-chlorotrifluoroethylene (49.5:50.5) copolymer (H-1) and a conventional copolymer containing 49.5 mole percent ethylene, 48 mole percent chlorotrifluoroethylene, and 2.5 mole percent hexafluoroisobutylene. Both of these two conventional copolymers failed this test within 24 hours, whereas copolymers of the present invention passed it in that they did not fail after 120 hrs.

WE CLAIM:

1. A solid copolymer of chlorotrifluoroethylene, ethylene and an effective amount of one or more perfluoroalkylethylenes having the formula:

$$R_1CH=CH_2$$

wherein $R_1$ is a linear or branched chain perfluoroalkyl group.

2. The solid copolymer of claim 1 wherein $R_1$ is a linear or branched chain perfluoroalkyl group having up to about 25 carbons.

3. The solid copolymer of claim 2 wherein said perfluoroalkylethylenes contain up to about 14 carbon atoms and are of the formula:

$$CF_3\underset{\displaystyle R_2}{\underset{|}{C}}F(CF_2\underset{\displaystyle R_3}{\underset{|}{C}}F)_nCH_2{=}CH_2$$

wherein:

n is an integer of from 0 to about 5; and

$R_2$ and $R_3$ are the same or different at each occurrence and are fluorine or perfluoroalkyl having from 1 to about 4 carbons.

4. The solid copolymer of claim 3 wherein:

n is 0 to about 3; and

$R_2$ and $R_3$ are the sâme or different and are fluorine or trifluoromethyl.

5. The solid copolymer of claim 4 wherein $R_2$ and $R_3$ are fluorine.

6. The solid copolymer of claim 1 wherein the amount of said perfluoroalkylethylene is from about 0.1 to about 10 mole percent based on the total weight of said copolymer.

7. The solid copolymer of claim 6 wherein said amount is about 0.1 to about 5 mole percent.

8. The solid copolymer of claim 7 which comprises more than one type of perfluoroalkylethylene.

9. The solid copolymer of claim 8 which comprises a mixture of perfluorobutylethylene, perfluorohexylethylene and perfluorooctylethylene.

10. The solid copolymer of claim 1 wherein said copolymer is characterized by having chlorotrifluoroethylene-ethylene-perhalo alkylethylene segments randomly distributed throughout blocks of alternating chlorotrifluoroethylene-ethylene segments.